(19) Europäisches Patentamt
European Patent Office
Office européen des brevets

(11) **EP 4 604 377 A1**

(12) **EUROPEAN PATENT APPLICATION**
published in accordance with Art. 153(4) EPC

(43) Date of publication:
**20.08.2025  Bulletin 2025/34**

(21) Application number: 23876142.3

(22) Date of filing: 27.04.2023

(51) International Patent Classification (IPC):
*H02M 3/155* (2006.01)    *H02M 1/088* (2006.01)
*H02M 1/00* (2006.01)    *H02M 7/44* (2006.01)
*H02J 7/35* (2006.01)

(52) Cooperative Patent Classification (CPC):
Y02E 10/56

(86) International application number:
**PCT/CN2023/091135**

(87) International publication number:
**WO 2024/077931 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.10.2022  CN 202211242950**

(71) Applicant: Sungrow Power Supply Co., Ltd.
**Hefei, Anhui 230088 (CN)**

(72) Inventors:
• HU, Fanyu
  **Hefei, Anhui 230088 (CN)**
• CAO, Jinhu
  **Hefei, Anhui 230088 (CN)**

(74) Representative: **Epping - Hermann - Fischer
Patentanwaltsgesellschaft mbH
Schloßschmidstraße 5
80639 München (DE)**

(54) **BUCK-BOOST CONVERTER AND POWER SUPPLY SYSTEM**

(57) The present application discloses a buck-boost converter and a power supply system. The converter comprises a controller, a controllable switching transistor, a freewheeling diode and a boost circuit. A first terminal and a second terminal of the controllable switching transistor are respectively connected to the positive input terminal of the buck-boost converter and the positive input terminal of the boost circuit. The anode and the cathode of the freewheeling diode are respectively connected to the negative input terminal of the buck-boost converter and the second terminal of the controllable switching transistor. The controller is used for controlling the buck-boost converter to work in a buck mode when the input voltage of the buck-boost converter is greater than a preset voltage, and controlling the buck-boost converter to work in a boost mode when the input voltage of the buck-boost converter is smaller than the preset voltage. Due to the existence of the freewheeling diode in the boost circuit, when the direct-current input terminal is short-circuited, the freewheeling diode in the boost circuit bears reverse voltage blocking, so as to avoid short circuiting of the output terminal of the buck-boost converter, thereby protecting the buck-boost converter.

**FIG. 2**

## Description

The present application claims the priority to Chinese Patent Application No. 202211242950.6, titled "BUCK-BOOST CONVERTER AND POWER SUPPLY SYSTEM", filed on October 11, 2022 with the China National Intellectual Property Administration, which is incorporated herein by reference in its entirety.

## FIELD

The present disclosure relates to the technical field of power electronics, and in particular to a buck-boost converter and a power supply system.

## BACKGROUND

The system, such as a photovoltaic inverter, is usually a two-stage system, including a first stage of a DCDC converter and a second stage of an inverter circuit. A direct-current bus capacitor is arranged between the two stages.

In a case of adopting a BuckBoost converter in the DCDC converter, the BuckBoost converter may flexibly control an input voltage and an output voltage. However, the adopting a BuckBoost converter in the DCDC converter may result in the following technical problems.

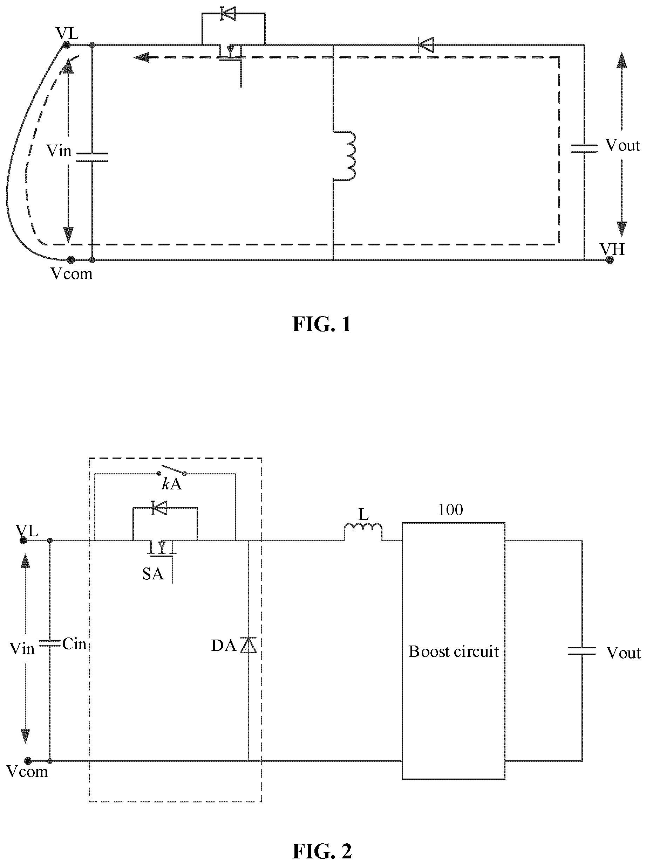

Reference is made to FIG. 1, which is a schematic diagram of a conventional BuckBoost converter.

The conventional BuckBoost converter shown in FIG. 1 may flexibly control the input voltage and the output voltage. However, in a case that the input is short circuited, that is, VL and Vcom are short circuited and Vin is 0, the bus voltage connected to the output capacitor is to be short circuited, which may result in a serious damage. This fatal defect should be avoided in the photovoltaic system, as the defect may cause the direct-current bus to be short circuited and thus the entire photovoltaic system to malfunction.

## SUMMARY

In view of this, a buck-boost converter and a power supply system are provided according to the present disclosure, to prevent the output terminal of the buck-boost converter from being short circuited with the input terminal, thereby protecting the buck-boost converter.

A buck-boost converter is provided according to the present disclosure. The buck-boost converter includes: a controller, a controllable switching transistor, a freewheeling diode, and a Boost circuit. A first terminal of the controllable switching transistor is connected to a positive input terminal of the buck-boost converter, and a second terminal of the controllable switching transistor is connected to a positive input terminal of the Boost circuit. An anode of the freewheeling diode is connected to a negative input terminal of the buck-boost converter, and a cathode of the freewheeling diode is connected to the second terminal of the controllable switching transistor. The controller is configured to: control the buck-boost converter to operate in a buck mode in a case that an input voltage of the buck-boost converter is greater than a preset voltage, and control the buck-boost converter to operate in a boost mode in a case that the input voltage of the buck-boost converter is less than the preset voltage.

In an embodiment, the preset voltage is equal to an output voltage of the Boost circuit. The Boost circuit is a two-level Boost circuit or a three-level Boost circuit. In a case that the Boost circuit is the three-level Boost circuit, the three-level Boost circuit is a symmetrical three-level Boost circuit or a three-level Boost circuit with a flying capacitor.

In an embodiment, in a case that the Boost circuit is the two-level Boost circuit, in the boost mode, the controller is configured to control the controllable switching transistor to operate in a normal-on state, and the two-level Boost circuit operates in a boost state; and in the buck mode, the controller is configured to control the controllable switching transistor to operate in a state same as a state of the switching transistor in the two-level Boost circuit, and the two-level Boost circuit operates in a buck state.

In an embodiment, the two-level Boost circuit includes: a first switching transistor, an inductor, and a first diode. A first terminal of the inductor is connected to the second terminal of the controllable switching transistor, and a second terminal of the inductor is connected to an anode of the first diode. A first terminal of the first switching transistor is connected to the second terminal of the inductor, and a second terminal of the first switching transistor is connected to the anode of the freewheeling diode. A cathode of the first diode is connected to a positive output terminal of the buck-boost converter.

In an embodiment, in a case that the three-level Boost circuit is the symmetrical three-level Boost circuit, in the boost mode, the controller is configured to control the controllable switching transistor to operate in a normal-on state, and the symmetrical three-level Boost circuit operates in a boost state; and in the buck mode, the controller is configured to control the controllable switching transistor to operate in a state same as a state of the switching transistor in the symmetrical three-level Boost circuit, and the symmetrical three-level Boost circuit operates in a buck state.

In an embodiment, the symmetrical three-level Boost circuit includes: an inductor, a first switching transistor, a second switching transistor, a first diode, and a second diode. A first terminal of the inductor is connected to the second terminal of the controllable switching transistor, a second terminal of the inductor is connected to an anode of the first diode, and a cathode of the first diode is connected to a positive output terminal of the buck-boost converter. A first terminal of the first switching transistor is connected to the second terminal of the inductor, a second terminal of the first switching transistor is connected to a first terminal of the second switching transistor, and a second terminal of the second switching transistor is connected to the anode of the freewheeling diode. The second terminal of the first switching transistor is connected to an output midpoint of the buck-boost converter.

In an embodiment, in a case that the three-level Boost circuit is the three-level Boost circuit with the flying capacitor, in the boost mode, the controller is configured to control the controllable switching transistor to operate in a normal-on state, and the three-level Boost circuit with the flying capacitor operates in a boost state; and in the buck mode, the controller is configured to perform synchronous triggering on the controllable switching transistor and a switching transistor in the three-level Boost circuit with the flying capacitor, where the synchronous triggering refers to rising edges or falling edges of corresponding driving signals are synchronized.

In an embodiment, the three-level Boost circuit with the flying capacitor includes: an inductor, a first switching transistor, a second switching transistor, a first diode, a second diode, the flying capacitor, and a flying diode. A first terminal of the inductor is connected to the second terminal of the controllable switching transistor, a second terminal of the inductor is connected to an anode of the first diode, and a cathode of the first diode is connected to a positive output terminal of the buck-boost converter through the second diode. A first terminal of the first switching transistor is connected to the second terminal of the inductor, a second terminal of the first switching transistor is connected to a first terminal of the second switching transistor, and a second terminal of the second switching transistor is connected to the anode of the freewheeling diode. A first terminal of the flying capacitor is connected to a cathode of the first diode, and a second terminal of the flying capacitor is connected to a second terminal of the first switching transistor. An anode of the flying diode is connected to the second terminal of the first switching transistor, and a cathode of the flying diode is connected to an output midpoint of the buck-boost converter.

In an embodiment, the controllable switching transistor includes a diode reversely connected in parallel. The buck-boost converter further includes a switch. The switch is connected in parallel with the controllable switching transistor and operates in a same state as the controllable switching transistor.

In an embodiment, the controller is configured to control the controllable switching transistor to operate in the normal-on state, in a case that the switching transistor in the Boost circuit is turned on, a direct-current power supply charges an inductor in the Boost circuit; in a case that the switching transistor in the Boost circuit is turned off, both the direct-current power supply and the inductor supply power to a load; and the buck-boost converter operates in the boost mode. The controller is further configured to control the controllable switching transistor and the switching transistor in the Boost circuit to be turned on and turned off simultaneously, in a case that both the controllable switching transistor and the switching transistor in the Boost circuit are controlled to be turned on, the direct-current power supply charges the inductor in the Boost circuit; in a case that both the controllable switching transistor and the switching transistor in the Boost circuit are controlled to be turned off, the inductor supplies power to the load; and the buck-boost converter operates in the buck mode.

In an embodiment, the inductor is arranged separately from other components in the Boost circuit.

A power supply system is further provided according to the present disclosure. The power supply system includes the buck-boost converter described above, and further includes an inverter circuit. An output terminal of the buck-boost converter is connected to an input terminal of the inverter circuit.

In an embodiment, the power supply system includes multiple buck-boost converters. An input terminal of each of the multiple buck-boost converters is connected to a corresponding direct-current power supply. The direct-current power supply is a new energy power supply or a battery, and the new energy power supply includes photovoltaic strings or wind turbines. Output terminals of the multiple buck-boost converters are connected in parallel and then are connected the input terminal of the inverter circuit.

It can be seen that the present disclosure has the following beneficial effects.

The buck-boost converter according to the present disclosure may operate at an input voltage being less than an output voltage or at an input voltage being greater than an output voltage. In a case that the input voltage is required to be less than the output voltage, the controllable switching transistor and the freewheeling diode only perform a connection function, performing control similar to controlling a single Boost circuit. In a case that the input voltage is required to be greater than or close to the output voltage, the Boost circuit coordinates with the controllable switching transistor to perform control to achieve a stable and constant output voltage, ensuring that the performance of the buck-boost converter is not affected. Furthermore, the input voltage changes with a required command voltage, thereby achieving flexible control of the input voltage. In addition, due to the freewheeling diode in the Boost circuit, in a case that the direct-current input terminal is short circuited, the freewheeling diode in the Boost circuit is broken down by the reverse voltage, preventing the output terminal of the buck-boost converter from being short circuited with the short-circuited input terminal, thereby protecting the buck-boost converter and the system, such as a photovoltaic system, to which the buck-boost converter is applied.

**BRIEF DESCRIPTION OF THE DRAWINGS**

FIG. 1 is a schematic diagram of a conventional BuckBoost converter;

FIG. 2 is a schematic diagram of a buck-boost inverter according to an embodiment of the present disclosure;

FIG. 3 is a schematic diagram of a buck-boost inverter according to another embodiment of the present disclosure;

FIG. 4 is a schematic diagram showing a current path of the buck-boost converter shown in FIG. 3 in a first boost mode;

FIG. 5 is a schematic diagram showing a current path of the buck-boost converter shown in FIG. 3 in a second boost mode;

FIG. 6 is a schematic diagram showing a current path of the buck-boost converter shown in FIG. 3 in a first buck mode;

FIG. 7 is a schematic diagram showing a current path of the buck-boost converter shown in FIG. 3 in a second buck mode;

FIG. 8 is a schematic diagram of a buck-boost converter according to another embodiment of the present disclosure;

FIG. 9 is a schematic diagram showing a current path of the buck-boost converter shown in FIG. 8 in a first boost mode;

FIG. 10 is a schematic diagram showing a current path of the buck-boost converter shown in FIG. 8 in a second boost mode;

FIG. 11 is a schematic diagram showing a current path of the buck-boost converter shown in FIG. 8 in a first buck mode;

FIG. 12 is a schematic diagram showing a current path of the buck-boost converter shown in FIG. 8 in a second buck mode;

FIG. 13 is a schematic diagram showing output terminals of multiple buck-boost converters being connected in parallel;

FIG. 14 is a schematic diagram of a buck-boost converter according to another embodiment of the present disclosure;

FIG. 15 is a schematic diagram showing a current path of the buck-boost converter shown in FIG. 14 in a first boost mode;

FIG. 16 is a schematic diagram showing a current path of the buck-boost converter shown in FIG. 14 in a second boost mode;

FIG. 17 is a schematic diagram showing a current path of the buck-boost converter shown in FIG. 14 in a third boost mode;

FIG. 18 is a schematic diagram showing a current path of the buck-boost converter shown in FIG. 14 in a fourth boost mode;

FIG. 19 is a schematic diagram showing a current path of the buck-boost converter shown in FIG. 14 in a first buck mode;

FIG. 20 is a schematic diagram showing a current path of the buck-boost converter shown in FIG. 14 in a second buck mode;

FIG. 21 is a schematic diagram showing a current path of the buck-boost converter shown in FIG. 14 in a third buck mode;

FIG. 22 is a schematic diagram showing a current path of the buck-boost converter shown in FIG. 14 in a fourth buck mode; and

FIG. 23 is a schematic diagram of a power supply system according to an embodiment of the present disclosure.

## DETAILED DESCRIPTION

The application scenarios of the buck-boost converter are not limited in the embodiments of the present disclosure. For example, the application scenarios of the buck-boost converter may include the photovoltaic power generation field, the energy storage field, or other power supply fields.

In order to perform flexibly control of the input voltage and the output voltage, to obtain a stable output voltage in a case of the input voltage being greater than the output voltage or in a case of the input voltage being less than the output voltage, and to avoid a short circuit at the input terminal causing a short circuit at the output terminal, a buck-boost converter is provided according to an embodiment of the present disclosure.

In order to make the above objectives, features and advantages of the present disclosure more apparent and easier to be understood, the embodiments of the present disclosure are described in detail below in conjunction with the drawings and the embodiments.

Reference is made to FIG. 2, which is a schematic diagram of a buck-boost converter according to an embodiment of the present disclosure.

The buck-boost converter according to the embodiment includes: a controller (not shown in FIG. 2), a controllable switching transistor SA, a freewheeling diode DA, and a Boost circuit 100.

A first terminal the controllable switching transistor SA is connected to a positive input terminal of the buck-boost converter, and a second terminal of the controllable switching transistor SA is connected to a positive input end of the Boost circuit.

An anode of the freewheeling diode DA is connected to a negative input terminal of the buck-boost converter, and a cathode of the freewheeling diode DA is connected to the second terminal of the controllable switching transistor SA.

In addition, input terminals of the buck-boost converter are connected to an input capacitor Cin.

The controller is configured to: control the buck-boost converter to operate in a buck mode in a case that an input voltage Vin of the buck-boost converter is greater than a preset voltage, and control the buck-boost converter to operate in a boost mode in a case that the input voltage Vin of the buck-boost converter is less than the preset voltage. The controllable switching transistor SA operates in a normal-on state.

The preset voltage is proportional to an output voltage Vout of the Boost circuit.

In an implementation, for example, the preset voltage may be equal to the output voltage Vout of the Boost circuit. In addition, those skilled in the art may determine another value as the preset voltage according to requirements.

The implementation of the Boost circuit is not limited in the embodiments of the present disclosure. For example, the Boost circuit may be a two-level Boost circuit or a three-level Boost circuit.

In a case that the Boost circuit is the three-level Boost circuit, the three-level Boost circuit may be a symmetrical three-level Boost circuit or a three-level Boost circuit with a flying capacitor.

The buck-boost converter according to the embodiment of the present disclosure may operate at an input voltage being less than an output voltage or at an input voltage being greater than an output voltage. In a case that the input voltage Vin is required to be less than the output voltage Vout, the controllable switching transistor SA and the freewheeling diode DA only perform a connection function, performing control similar to controlling a single Boost circuit. In a case that the input voltage Vin is required to be greater than or close to the output voltage Vout, the Boost circuit DA coordinates with the controllable switching transistor SA to perform control to achieve a stable and constant output voltage Vout, ensuring that the performance of the buck-boost converter is not affected. Furthermore, the input voltage Vin changes with a required command voltage, thereby achieving flexible control of the input voltage.

In addition, due to the freewheeling diode in the Boost circuit, in a case that the direct-current input terminal is short circuited, the freewheeling diode in the Boost circuit is broken down by the reverse voltage, preventing the output terminal of the buck-boost converter from being short circuited with the short-circuited input terminal, thereby protecting the buck-boost converter and the system, such as a photovoltaic system, to which the buck-boost converter is applied.

In addition, in practical applications, the controllable switching transistor includes a diode reversely connected in parallel.

The buck-boost converter further includes a switch kA. The switch kA is connected in parallel with the controllable switching transistor SA, and operates in a same state as the controllable switching transistor SA. For example, in a case that the controllable switching transistor SA operates in the normal-on state, the switch kA may be controlled to be turned

**EP 4 604 377 A1**

on for replacing SA operating in the normal-on state, thereby reducing the power consumption of the buck-boost converter due to that the conduction loss of kA is less than the conduction loss of SA.

The operations in a case of the input voltage being equal to the output voltage are not provided in the embodiments of the present disclosure. For example, the operations of the switching transistors may not be controlled.

An implementation in which the Boost circuit is a two-level Boost circuit is described as below.

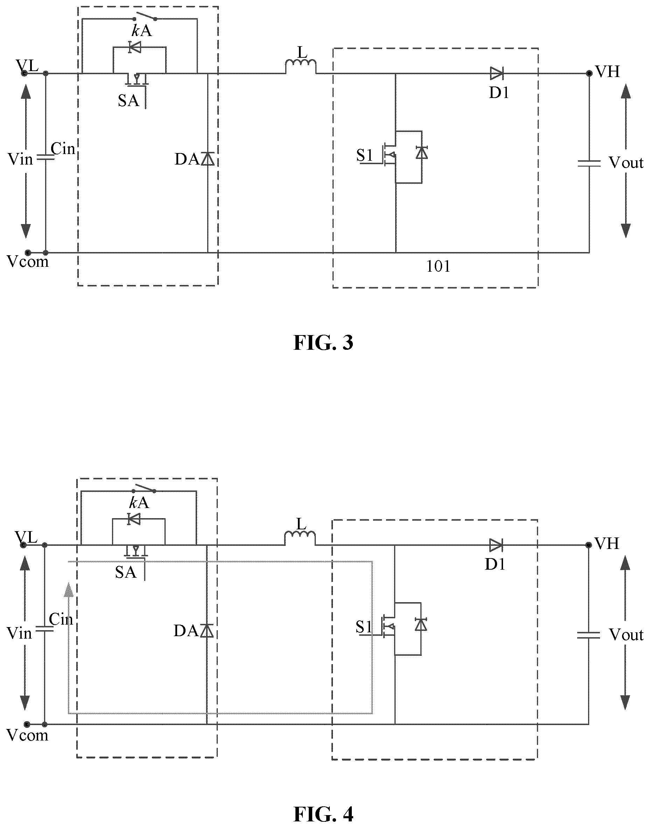

Reference is made to FIG. 3, which is a schematic diagram of a buck-boost converter according to another embodiment of the present disclosure.

In the embodiment, descriptions are provided by taking a two-level Boost circuit including a first switching transistor S1, an inductor L and a first diode D1 as an example.

A first terminal of the inductor L is connected to the second terminal of the controllable switching transistor SA, and a second terminal of the inductor L is connected to an anode of the first diode D1. A first terminal of the first switching transistor S1 is connected to the second terminal of the inductor L, and a second terminal of the first switching transistor S1 is connected to the anode of the freewheeling diode DA. A cathode of the first diode D1 is connected to a positive output terminal of the buck-boost converter.

In the buck-boost converter according to the embodiment, in a case that the Boost circuit is the two-level Boost circuit, in the boost mode, the controller is configured to control the controllable switching transistor SA to operate in a normal-on state, and the two-level Boost circuit operates in a boost state; and in the buck mode, the controller is configured to control the controllable switching transistor SA to operate in a state same as a state of the switching transistor in the two-level Boost circuit, and the two-level Boost circuit operates in a buck state.

Hereinafter, detailed descriptions are provided in reference with current path diagrams.

Reference is made to FIG. 4, which is a schematic diagram showing a current path of the buck-boost converter shown in FIG. 3 in a first boost mode.

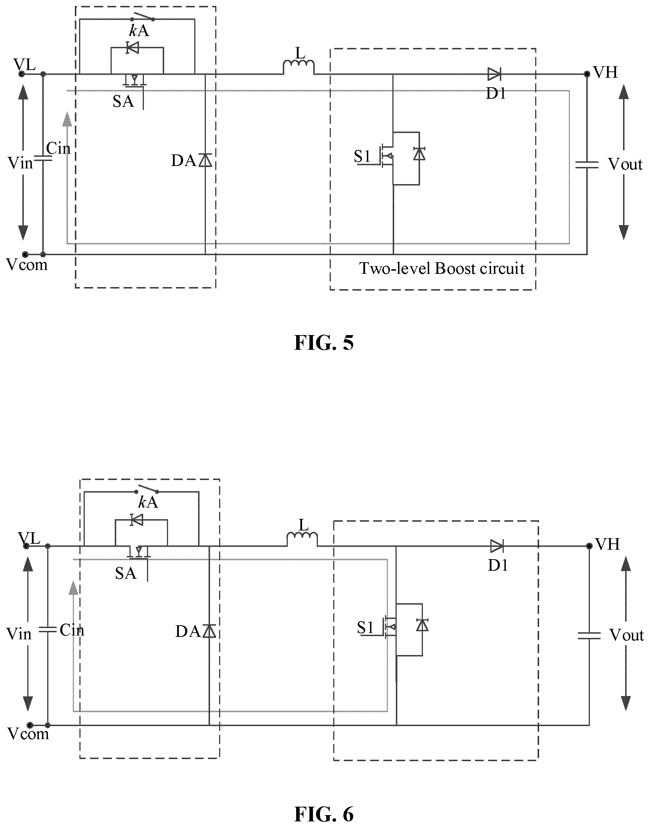

Reference is made to FIG. 5, which is a schematic diagram showing a current path of the buck-boost converter shown in FIG. 3 in a second boost mode.

In the boost mode, the SA operates in the normal-on state or the kA is turned on, the circuit may be equivalent to a Boost converter, and S1 performs a chopping operation to control the relationship between the input voltage Vin and the output voltage Vout.

As shown in FIG. 4, after S1 is turned on, the current path is Cin-SA-L-S1, the input voltage Vin charges the inductor L, and the inductor L stores energy.

As shown in FIG. 5, after S1 is turned off, the inductor L releases energy to the output capacitor, the current path is Cin-SA-L-D1-Cout, and the output capacitor is charged, achieving a boost effect.

Reference is made to FIG. 6, which is a schematic diagram showing a current path of the buck-boost converter shown in FIG. 3 in a first buck mode.

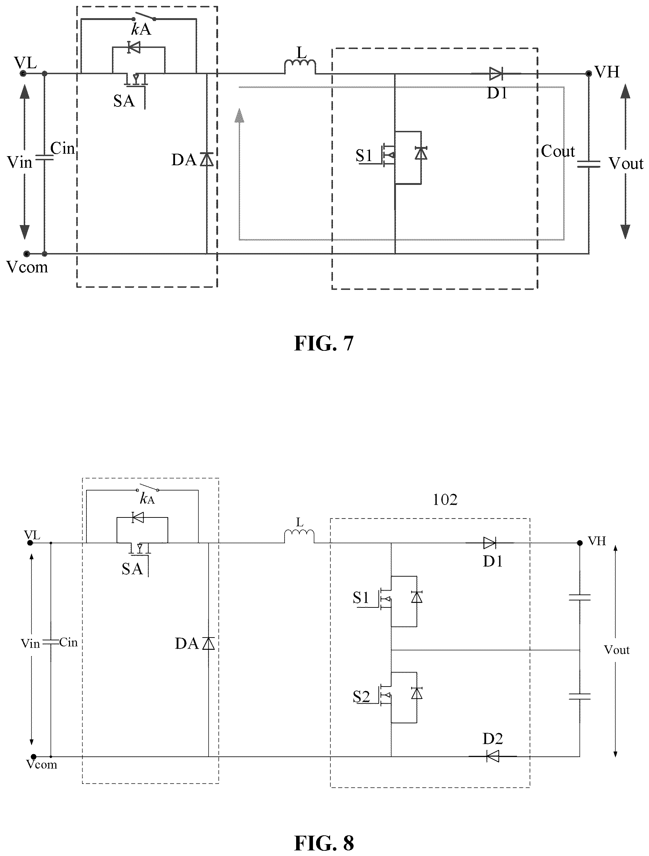

Reference is made to FIG. 7, which is a schematic diagram showing a current path of the buck-boost converter shown in FIG. 3 in a second buck mode.

In the buck mode, S1 and SA are turned on and turned off simultaneously, the corresponding driving signals are the same, and SA performs a chopping operation to control the relationship between the input voltage Vin and the output voltage Vout, and thus the circuit may be equivalent to a Buck converter.

As shown in FIG. 6, after SA and S1 are turned on, the input voltage Vin charges the inductor L, the current path is Cin-SA-L-S1, and the inductor L stores energy.

As shown in FIG. 7, after SA and S1 are turned off, the inductor L releases energy to the output capacitor, the current path is L-D1-Cout-DA, and the output capacitor is charged, thereby achieving a buck effect.

In the buck mode, it is assumed that the time period of the first buck mode (that is, the conduction time period of SA and S1) is ton and the switching period is T, and based on the volt-second balance principle, the relationship between the input voltage Vin and the output voltage Vout is expressed as:

$$Vin=(T-ton)/ton*Vout \qquad (1)$$

It can be seen from the above equation (1) that, in a case that the input voltage Vin is close to the output voltage Vout, the duty cycle of the switching transistor is about 0.5, which does not cause the narrow pulse problem, thereby avoiding the problems such as reduced control margin, low efficiency and electromagnetic interference in the input voltage and the output voltage caused by the narrow pulse problem of the Boost circuit.

The two-level Boost circuit has been described above, and the implementation of the three-level Boost circuit is described below.

Reference is made to FIG. 8, which is a schematic diagram of a buck-boost converter according to another embodiment of the present disclosure.

In the buck-boost converter according to the embodiment, in a case that the Boost circuit is a symmetrical three-level Boost circuit, the symmetrical three-level Boost circuit includes: an inductor L, a first switching transistor S1, a second switching transistor S2, a first diode D1, and a second diode D2.

A first terminal of the inductor L is connected to the second terminal of the controllable switching transistor SA, a second terminal of the inductor L is connected to an anode of the first diode D1, and a cathode of the first diode D1 is connected to a positive output terminal VH of the buck-boost converter.

A first terminal of the first switching transistor S1 is connected to the second terminal of the inductor L, a second terminal of the first switching transistor S1 is connected to a first terminal of the second switching transistor S2, and a second terminal of the second switching transistor S2 is connected to the anode of the freewheeling diode DA.

The second terminal of the first switching transistor S1 is connected to an output midpoint of the buck-boost converter. The output midpoint refers to a point at which the voltage equal to half of the output voltage of the buck-boost converter, that is, a midpoint between the two capacitors connected in series at the output terminal.

In a case that the three-level Boost circuit is the symmetrical three-level Boost circuit, in the boost mode, the controller is configured to control the controllable switching transistor SA to operate in a normal-on state, and the symmetrical three-level Boost circuit operates in a boost state; and in the buck mode, the controller is configured to control the controllable switching transistor SA to operate in a state same as a state of the switching transistor in the symmetrical three-level Boost circuit, that is, the controllable switching transistor SA and the switching transistor in the symmetrical three-level Boost circuit are turned on and turned off simultaneously, and the symmetrical three-level Boost circuit operates in a buck state.

The operation principle of the buck-boost converter in a case that the Boost circuit is a symmetrical three-level Boost circuit is described in detail below in conjunction with the current path diagrams.

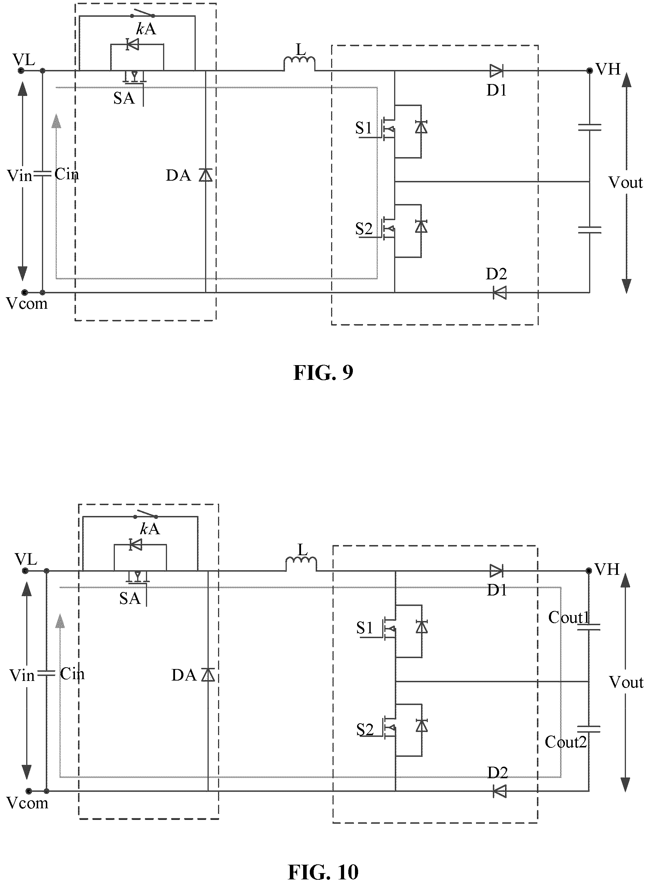

Reference is made to FIG. 9, which is a schematic diagram showing a current path of the buck-boost converter shown in FIG. 8 in a first boost mode.

Reference is made to FIG. 10, which is a schematic diagram showing a current path of the buck-boost converter shown in FIG. 8 in a second boost mode.

In the boost mode, the SA operates in the normal-on state or the kA is turned on, the circuit may be equivalent to a symmetrical three-level Boost converter, and S1 and S2 perform a chopping operation to control the relationship between the input voltage Vin and the output voltage Vout.

As shown in FIG. 9, after S1 and S2 are turned on, the current path is Cin-SA-L-S1-S2, the input voltage Vin charges the inductor L, and the inductor L stores energy. As shown in FIG. 10, after S1 and S2 are turned off, the inductor L releases energy to the output capacitor, the current path is Cin-SA-L-D1-Cout1-Cout2-D2, and the output capacitor is charged, achieving a boost effect.

The operations in the buck mode are described below.

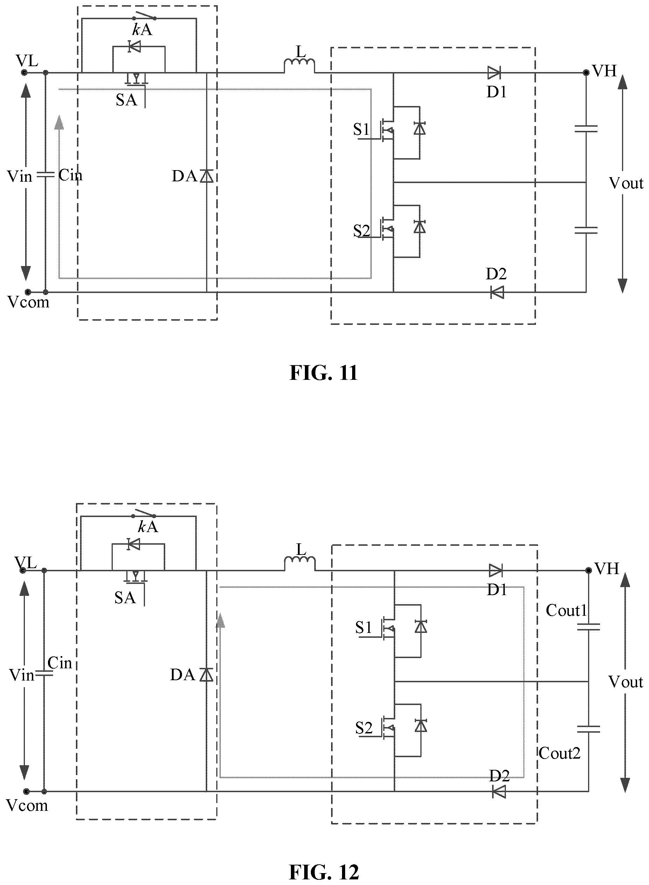

Reference is made to FIG. 11, which is a schematic diagram showing a current path of the buck-boost converter shown in FIG. 8 in a first buck mode.

Reference is made to FIG. 12, which is a schematic diagram showing a current path of the buck-boost converter shown in FIG. 8 in a second buck mode.

In the buck mode, S1, S2 and SA are turned on and turned off simultaneously, and a chopping operation is performed to control the relationship between the input voltage Vin and the output voltage Vout, and thus the circuit may be equivalent to a three-level Buck converter.

As shown in FIG. 11, after SA, S1 and S2 are turned on, the input voltage Vin charges the inductor L, the current path is Cin-SA-L-S1-S2, and the inductor L stores energy.

As shown in FIG. 12, after SA, S1, and S2 are turned off, the inductor L releases energy to the output capacitor, the current path is L-D1-Cout1-Cout2-D2-DA, and the output capacitor is charged, thereby achieving a buck effect.

Similarly, in the buck mode, it is assumed that the time period of the first buck mode (that is, the conduction time period of SA, S1 and S2) is ton and the switching period is T. Based on the volt-second balance principle, the relationship between the input voltage Vin and the output voltage Vout is expressed as:

$$Vin = (T-ton)/ton * Vout \qquad (2)$$

It can be seen from the above equation (2) that, in a case that the input voltage Vin is close to the output voltage Vout, the duty cycle of the switching transistor is about 0.5, which does not cause the narrow pulse problem, thereby avoiding the problems such as reduced control margin, low efficiency and electromagnetic interference in the input voltage and the output voltage caused by the narrow pulse problem of the Boost circuit.

The device connected to the output terminal of the buck-boost converter is not limited in the embodiments of the present disclosure. For example, the device may be an inverter circuit. In addition, in a case of arranging multiple buck-boost converters, the output terminals of the multiple buck-boost converters may be connected in parallel. Detailed descriptions are provided below in conjunction with the drawings, where it is taken that the Boost circuit is a symmetrical three-level Boost circuit as an example.

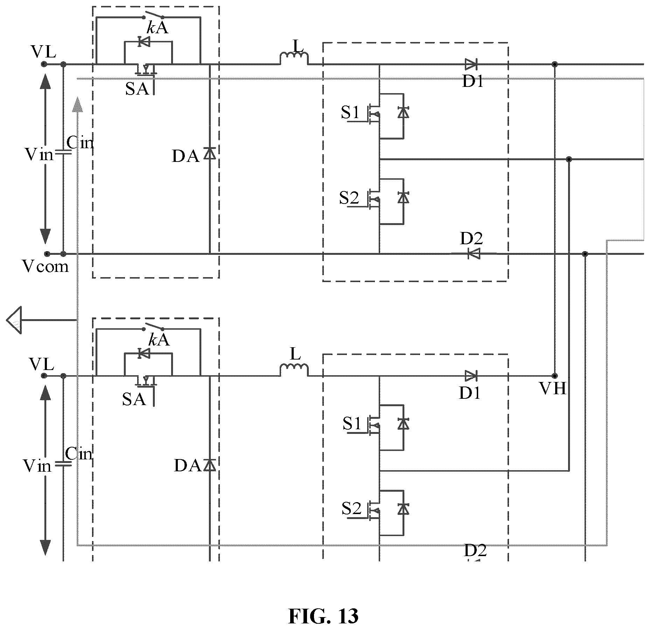

Reference is made to FIG. 13, which is a schematic diagram showing output terminals of multiple buck-boost converters being connected in parallel.

In the following descriptions, an input terminal of each of the multiple buck-boost converters is connected to a photovoltaic string.

In a case that different photovoltaic strings are short circuited to ground, two inputs are superimposed to charge the direct-current bus capacitor, and the capacitor is easily damaged by overvoltage. With the buck-boost converter according to the embodiments of the present disclosure, ground short-circuit faults of multiple photovoltaic strings may be detected in real time. Compared with the conventional symmetrical three-level converter that cannot disconnect the charging circuit, according to the present disclosure, the SA and kA can be disconnected rapidly, so that the charging circuit is disconnected, thereby avoiding damage to the direct-current bus capacitor due to overvoltage caused by continuous charging.

The implementation of the Boost circuit as a three-level Boost circuit with a flying capacitor is described below.

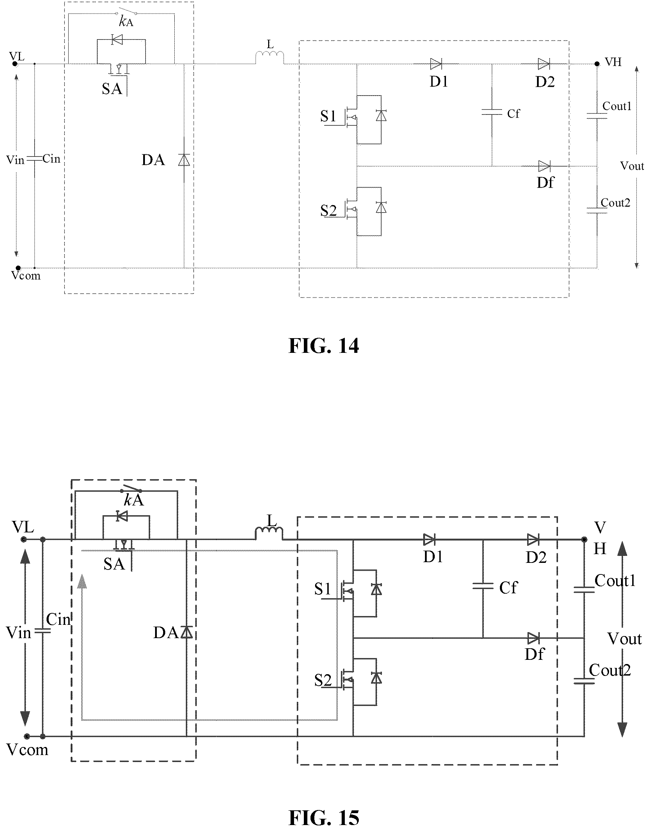

Reference is made to FIG. 14, which is a schematic diagram of a buck-boost converter according to another embodiment of the present disclosure.

In the buck-boost converter according to the embodiment, the three-level Boost circuit with the flying capacitor includes: an inductor L, a first switching transistor S1, a second switching transistor S2, a first diode D1, a second diode D2, the flying capacitor Cf, and a flying diode Df.

A first terminal of the inductor L is connected to the second terminal of the controllable switching transistor SA, a second terminal of the inductor L is connected to an anode of the first diode D1, and a cathode of the first diode D1 is connected to a positive output terminal VH of the buck-boost converter through the second diode D2.

A first terminal of the first switching transistor S1 is connected to the second terminal of the inductor L, a second terminal of the first switching transistor S1 is connected to a first terminal of the second switching transistor S2, and a second terminal of the second switching transistor S2 is connected to the anode of the freewheeling diode DA.

A first terminal of the flying capacitor Cf is connected to a cathode of the first diode D1, and a second terminal of the flying capacitor Cf is connected to a second terminal of the first switching transistor S1.

An anode of the flying diode Df is connected to the second terminal of the first switching transistor S1, and a cathode of the flying diode Df is connected to an output midpoint of the buck-boost converter. That is, a first output capacitor Cout1 and a second output capacitor Cout2 are connected in series between the positive output terminal and the negative output terminal of the buck-boost converter. Generally, the capacitances of the first output capacitor Cout1 and the second output capacitor Cout2 are similar, so the voltages of the first output capacitor Cout1 and the second output capacitor Cout2 are similar. The common terminal of the first output capacitor Cout1 and the second output capacitor Cout2 is the output midpoint of the buck-boost converter.

In a case that the three-level Boost circuit is the three-level Boost circuit with the flying capacitor, in the boost mode, the controller is configured to control the controllable switching transistor to operate in a normal-on state, and the three-level Boost circuit with the flying capacitor operates in a boost state; and in the buck mode, the controller is configured to perform synchronous triggering on the controllable switching transistor and a switching transistor in the three-level Boost circuit with the flying capacitor. The synchronous triggering refers to rising edges or falling edges of corresponding driving signals are synchronized.

Detail operation principle is provided below with reference to current path diagrams.

In the boost mode, the SA operates in the normal-on state or the kA is turned on, the circuit may be equivalent to a three-level Boost converter with a flying capacitor, and S1 and S2 perform a chopping operation to control the relationship between the input voltage Vin and the output voltage Vout.

Reference is made to FIG. 15, which is a schematic diagram showing a current path of the buck-boost converter shown in FIG. 14 in a first boost mode.

After S1 and S2 are turned on, the current path is Cin-SA-L-S1-S2, the input voltage Vin charges the inductor L, and the inductor L stores energy.

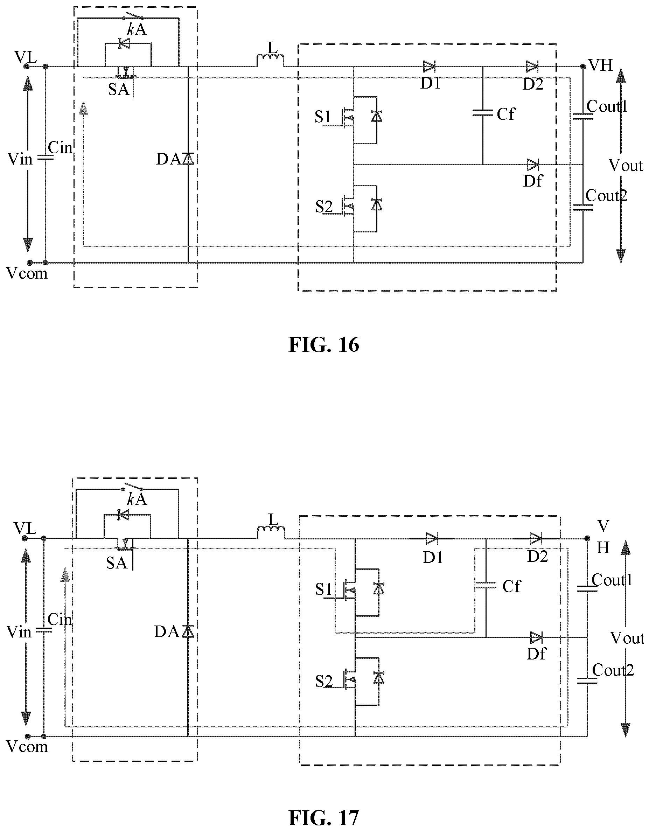

Reference is made to FIG. 16, which is a schematic diagram showing a current path of the buck-boost converter shown in FIG. 14 in a second boost mode.

After S1 and S2 are turned off, the inductor L releases energy to the output capacitors, the current path is Cin-SA-L-D1-D2-Cout1-Cout2, and the current charges the first output capacitor Cout1 and the second output capacitor Cout2.

Reference is made to FIG. 17, which is a schematic diagram showing a current path of the buck-boost converter shown in FIG. 14 in a third boost mode.

After S1 is turned on and S2 is turned off, the energy on the flying capacitor Cf and the energy on the inductor L are released, and the first output capacitor Cout1 and the second output capacitor Cout2 are charged.

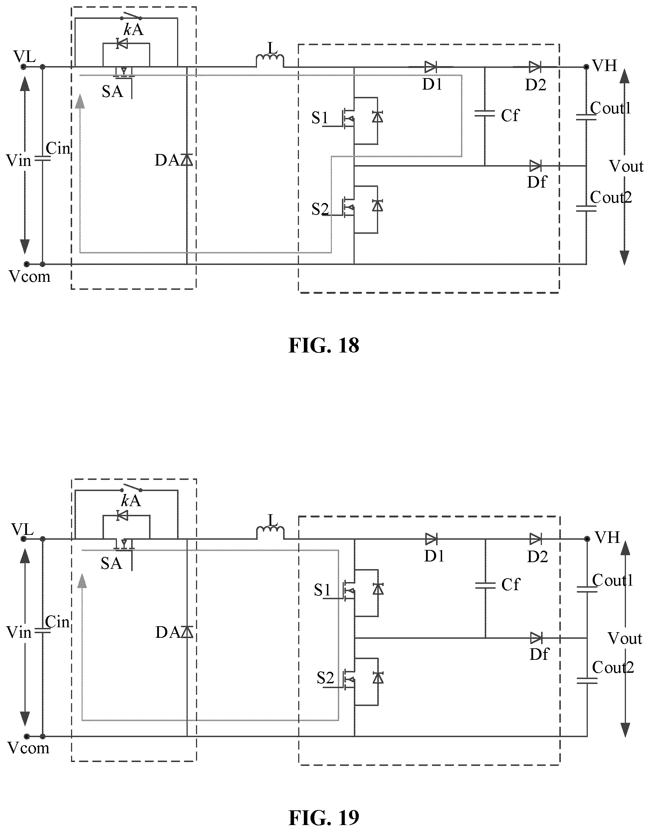

Reference is made to FIG. 18, which is a schematic diagram showing a current path of the buck-boost converter shown in FIG. 14 in a fourth boost mode.

After S1 is turned off and S2 is turned on, the input terminal charges the flying capacitor Cf and the inductor L to store energy.

It can be seen that the buck-boost converter according to the embodiments of the present disclosure shown in FIG. 14 provided switches between the above four boost modes for achieving boost effect.

The implementation of the buck mode is described below in conjunction with the current path diagrams.

Reference is made to FIG. 19, which is a schematic diagram showing a current path of the buck-boost converter shown in FIG. 14 in a first buck mode.

In the buck mode, S1, S2 and SA perform a chopping operation to control the relationship between the input voltage Vin and the output voltage Vout. There are four buck modes.

After the switching transistors S1, S2 and SA are turned on, the current path is Cin-SA-L-S1-S2, the input voltage charges the inductor L, and the inductor L stores energy.

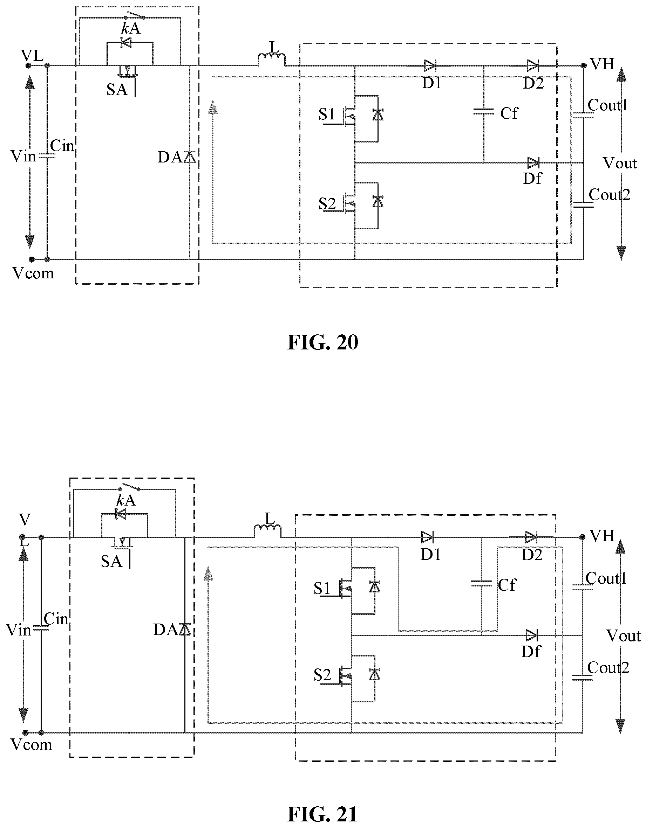

Reference is made to FIG. 20, which is a schematic diagram showing a current path of the buck-boost converter shown in FIG. 14 in a second buck mode.

After SA, S1, and S2 are turned off, the inductor L releases energy to the output capacitors, the current path is L-D1-D2-Cout1-Cout2-DA, and the output capacitors Cout1 and Cout2 are charged.

Reference is made to FIG. 21, which is a schematic diagram showing a current path of the buck-boost converter shown in FIG. 14 in a third buck mode.

After SA is turned off, S1 is turned on and S2 is turned off, the current path is L-S1-Cf-D2-Cout1-Cout2-DA, the energy on the flying capacitor Cf and the energy on inductor L are released, and the output capacitors Cout1 and Cout2 are charged.

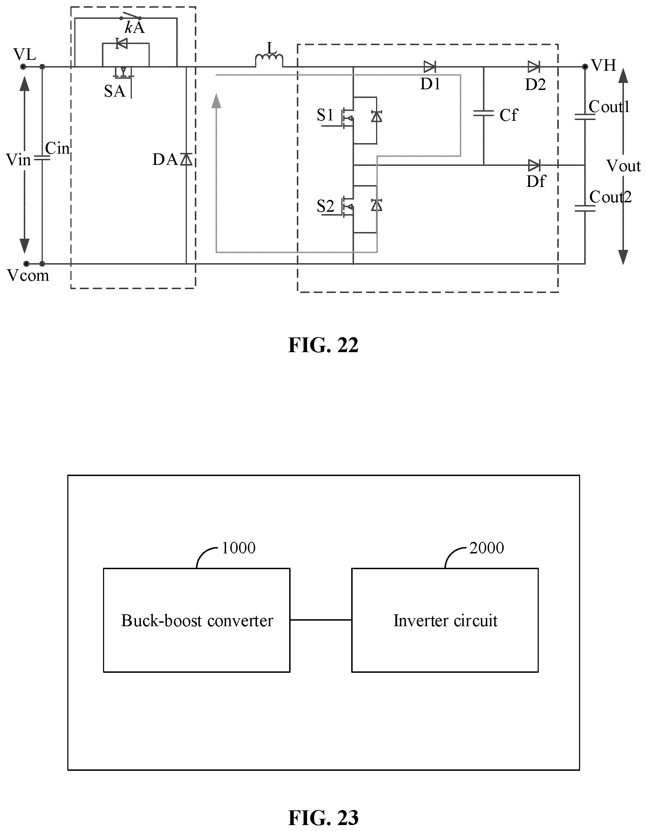

Reference is made to FIG. 22, which is a schematic diagram showing a current path of the buck-boost converter shown in FIG. 14 in a fourth buck mode.

After SA is turned off, S1 is turned off and S2 is turned on, the current path is L-D1-Cf-S2-DA, and the inductor L releases energy to charge Cf for storaging energy. Based on command requirements for the input voltage Vin and output voltage Vout, the time periods and the switching sequence of the four buck modes are reasonably calculated for achieving buck effect.

Similarly, in the buck mode, it is assumed that the time period of the first buck mode (that is, the conduction time period of SA, S1 and S2) is t1, the time period of the second buck mode is t2, the time period of the third buck mode is t3, the time period of the fourth buck mode is t4, and the switching period is T. The voltage of the flying capacitor is equal to half of the output voltage. To maintain the voltage of the flying capacitor constant, the time period of the third buck mode is equal to the time period of the fourth buck mode, that is, t4 is equal to t3.

Based on the volt-second balance principle, the relationship between the input voltage Vin and the output voltage Vout and the relationship between the first buck mode, the third buck mode and the fourth buck mode are respectively expressed as:

$$\text{Vin*t1=Vout/2*2*t3+Vout*(T-t1-2*t3)} \qquad (3)$$

$$t1 \geq 2*t3 \qquad (4)$$

The equation (3) may be simplified as:

$$\text{Vin=(T-t1-t3)/t1*Vout} \qquad (5)$$

In a case that the input voltage Vin is close to the output voltage Vout, that is, Vin≈Vout, the equation (5) may be simplified as:

$$\text{T-t1-t3} = \text{t1} \qquad (6)$$

The time periods of S1 and S2 are expressed as:

$$t1+t3 = T-t1 \geq T-(t1+t3) \qquad (7)$$

Then, the following inequality is obtained

$$t1+t3 \geq T/2 \qquad (8)$$

It can be seen from the above inequality (8) that, in a case that the input voltage Vin is close to the output voltage Vout, the duty cycle of the switching transistor is about 0.5, which does not cause the narrow pulse problem, thereby avoiding the problems such as reduced control margin, low efficiency and electromagnetic interference in the input voltage and the output voltage caused by the narrow pulse problem of the Boost circuit.

It should be understood that for the product form of the Boost circuit in the various buck-boost converters according to the above embodiments of the present disclosure, the inductor may be arranged separately from other components in the Boost circuit, that is, the components other than the inductor in the Boost circuit may be integrated into one module. In addition, the controllable switching transistor, the freewheeling diode and the switch may be integrated into one module. The product form is not limited in the embodiments of the present disclosure, and may be determined according to actual requirements.

Based on the buck-boost converter according to the above embodiments, a power supply system is further provided according to an embodiment of the present disclosure. The power supply system is described in detail below in conjunction with the drawings.

Reference is made to FIG. 23, which is a schematic diagram of a power supply system according to an embodiment of the present disclosure.

The power supply system according to the embodiment includes the buck-boost converter 1000 described in the above embodiments, and further includes an inverter circuit 2000.

An output terminal of the buck-boost converter 1000 is connected to an input terminal of the inverter circuit 2000.

The power supply system may include one buck-boost converter or multiple buck-boost converters.

In a case that the power supply system includes multiple buck-boost converters, an input terminal of each of the multiple buck-boost converters is connected to a corresponding direct-current power supply. The direct-current power supply is a new energy power supply or a battery, and the new energy power supply includes photovoltaic strings or wind turbines.

Output terminals of the multiple buck-boost converters are connected in parallel and then are connected to the input terminal of the inverter circuit, as shown in FIG. 13. FIG. 13 shows an example in which only two buck-boost converters are arranged. More buck-boost converters may be arranged, and the Boost circuit is not limited to the symmetrical three-level Boost circuit shown in FIG. 13.

In the power supply system according to the embodiment, the buck-boost converter 1000 may operate at an input voltage being less than an output voltage or at an input voltage being greater than an output voltage. In a case that the input voltage is required to be less than the output voltage, the controllable switching transistor and the freewheeling diode only perform a connection function, performing control similar to controlling a single Boost circuit. In a case that the input voltage is required to be greater than or close to the output voltage, the Boost circuit coordinates with the controllable switching transistor to perform control to achieve a stable and constant output voltage, ensuring that the performance of the buck-boost converter is not affected. Furthermore, the input voltage changes with a required command voltage, thereby achieving flexible control of the input voltage.

In addition, due to the freewheeling diode in the Boost circuit, in a case that the direct-current input terminal is short circuited, the freewheeling diode in the Boost circuit is broken down by the reverse voltage, preventing the output terminal of the buck-boost converter from being short circuited with the short-circuited input terminal, thereby protecting the buck-boost converter and the system, such as a photovoltaic system, to which the buck-boost converter is applied.

The disclosed embodiments are described above, so that those skilled in the art can make or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

**Claims**

1. A buck-boost converter, comprising: a controller, a controllable switching transistor, a freewheeling diode, and a Boost circuit, wherein

   a first terminal of the controllable switching transistor is connected to a positive input terminal of the buck-boost converter, and a second terminal of the controllable switching transistor is connected to a positive input terminal of the Boost circuit;
   an anode of the freewheeling diode is connected to a negative input terminal of the buck-boost converter, and a cathode of the freewheeling diode is connected to the second terminal of the controllable switching transistor; and
   the controller is configured to: control the buck-boost converter to operate in a buck mode in a case that an input voltage of the buck-boost converter is greater than a preset voltage, and control the buck-boost converter to operate in a boost mode in a case that the input voltage of the buck-boost converter is less than the preset voltage.

2. The buck-boost converter according to claim 1, wherein

the preset voltage is equal to an output voltage of the Boost circuit;
the Boost circuit is a two-level Boost circuit or a three-level Boost circuit; and
in a case that the Boost circuit is the three-level Boost circuit, the three-level Boost circuit is a symmetrical three-level Boost circuit or a three-level Boost circuit with a flying capacitor.

3. The buck-boost converter according to claim 2, wherein
in a case that the Boost circuit is the two-level Boost circuit,

in the boost mode, the controller is configured to control the controllable switching transistor to operate in a normal-on state, and the two-level Boost circuit operates in a boost state; and
in the buck mode, the controller is configured to control the controllable switching transistor to operate in a state same as a state of the switching transistor in the two-level Boost circuit, and the two-level Boost circuit operates in a buck state.

4. The buck-boost converter according to claim 2, wherein

the two-level Boost circuit comprises: a first switching transistor, an inductor, and a first diode;
a first terminal of the inductor is connected to the second terminal of the controllable switching transistor, and a second terminal of the inductor is connected to an anode of the first diode;
a first terminal of the first switching transistor is connected to the second terminal of the inductor, and a second terminal of the first switching transistor is connected to the anode of the freewheeling diode; and
a cathode of the first diode is connected to a positive output terminal of the buck-boost converter.

5. The buck-boost converter according to claim 2, wherein
in a case that the three-level Boost circuit is the symmetrical three-level Boost circuit,

in the boost mode, the controller is configured to control the controllable switching transistor to operate in a normal-on state, and the symmetrical three-level Boost circuit operates in a boost state; and
in the buck mode, the controller is configured to control the controllable switching transistor to operate in a state same as a state of the switching transistor in the symmetrical three-level Boost circuit, and the symmetrical three-level Boost circuit operates in a buck state.

6. The buck-boost converter according to claim 2, wherein

the symmetrical three-level Boost circuit comprises: an inductor, a first switching transistor, a second switching transistor, a first diode, and a second diode;
a first terminal of the inductor is connected to the second terminal of the controllable switching transistor, a second terminal of the inductor is connected to an anode of the first diode, and a cathode of the first diode is connected to a positive output terminal of the buck-boost converter;
a first terminal of the first switching transistor is connected to the second terminal of the inductor, a second terminal of the first switching transistor is connected to a first terminal of the second switching transistor, and a second terminal of the second switching transistor is connected to the anode of the freewheeling diode; and
the second terminal of the first switching transistor is connected to an output midpoint of the buck-boost converter.

7. The buck-boost converter according to claim 2, wherein
in a case that the three-level Boost circuit is the three-level Boost circuit with the flying capacitor,

in the boost mode, the controller is configured to control the controllable switching transistor to operate in a normal-on state, and the three-level Boost circuit with the flying capacitor operates in a boost state; and
in the buck mode, the controller is configured to perform synchronous triggering on the controllable switching transistor and a switching transistor in the three-level Boost circuit with the flying capacitor, wherein the synchronous triggering refers to rising edges or falling edges of corresponding driving signals are synchronized.

8. The buck-boost converter according to claim 2, wherein

the three-level Boost circuit with the flying capacitor comprises: an inductor, a first switching transistor, a second switching transistor, a first diode, a second diode, the flying capacitor, and a flying diode;

a first terminal of the inductor is connected to the second terminal of the controllable switching transistor, a second terminal of the inductor is connected to an anode of the first diode, and a cathode of the first diode is connected to a positive output terminal of the buck-boost converter through the second diode;

a first terminal of the first switching transistor is connected to the second terminal of the inductor, a second terminal of the first switching transistor is connected to a first terminal of the second switching transistor, and a second terminal of the second switching transistor is connected to the anode of the freewheeling diode;

a first terminal of the flying capacitor is connected to a cathode of the first diode, and a second terminal of the flying capacitor is connected to a second terminal of the first switching transistor; and

an anode of the flying diode is connected to the second terminal of the first switching transistor, and a cathode of the flying diode is connected to an output midpoint of the buck-boost converter.

9. The buck-boost converter according to any one of claims 1 to 8, wherein

the controllable switching transistor comprises a diode reversely connected in parallel; and
the buck-boost converter further comprises a switch, and the switch is connected in parallel with the controllable switching transistor and operates in a same state as the controllable switching transistor.

10. The buck-boost converter according to claim 3 or 5, wherein

the controller is configured to control the controllable switching transistor to operate in the normal-on state, in a case that the switching transistor in the Boost circuit is turned on, a direct-current power supply charges an inductor in the Boost circuit; in a case that the switching transistor in the Boost circuit is turned off, both the direct-current power supply and the inductor supply power to a load; and the buck-boost converter operates in the boost mode; and

the controller is further configured to control the controllable switching transistor and the switching transistor in the Boost circuit to be turned on and turned off simultaneously,

in a case that both the controllable switching transistor and the switching transistor in the Boost circuit are controlled to be turned on, the direct-current power supply charges the inductor in the Boost circuit; in a case that both the controllable switching transistor and the switching transistor in the Boost circuit are controlled to be turned off, the inductor supplies power to the load; and the buck-boost converter operates in the buck mode.

11. The buck-boost converter according to any one of claims 1 to 8, wherein the inductor is arranged separately from other components in the Boost circuit.

12. A power supply system, comprising the buck-boost converter according to any one of claims 1 to 11, and further comprising an inverter circuit, wherein
an output terminal of the buck-boost converter is connected to an input terminal of the inverter circuit.

13. The power supply system according to claim 12, wherein

the power supply system comprises a plurality of buck-boost converters;
an input terminal of each of the plurality of buck-boost converters is connected to a corresponding direct-current power supply, wherein the direct-current power supply is a new energy power supply or a battery, and the new energy power supply comprises photovoltaic strings or wind turbines; and
output terminals of the plurality of buck-boost converters are connected in parallel and then are connected to the input terminal of the inverter circuit.

**FIG. 1**

**FIG. 2**

**FIG. 3**

**FIG. 4**

VL

Vin Cin

Vcom

SA

kA

DA

L

S1

D1

VH

Vout

Two-level Boost circuit

**FIG. 5**

VL

Vin Cin

Vcom

SA

kA

DA

L

S1

D1

VH

Vout

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

**FIG. 23**

## INTERNATIONAL SEARCH REPORT

| International application No. |
| --- |
| **PCT/CN2023/091135** |

| A. | CLASSIFICATION OF SUBJECT MATTER |
| --- | --- |

H02M 3/155(2006.01)i; H02M 1/088(2006.01)i; H02M 1/00(2007.01)i; H02M 7/44(2006.01)i; H02J 7/35(2006.01)i

According to International Patent Classification (IPC) or to both national classification and IPC

| B. | FIELDS SEARCHED |
| --- | --- |

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXTC, DWPI, WPABS, ENTXT, CNKI, IEEE: 升降压, 升压, 降压, 开关, 续流, 二极管, 三电平, 飞跨, 电容, boost, buck, switch, flywheel, diode, three level, flying, capacitor

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| PX | CN 115514220 A (SUNGROW POWER SUPPLY CO., LTD.) 23 December 2022 (2022-12-23) claims 1-13 | | 1-13 |
| X | CN 110249518 A (MITSUBISHI ELECTRIC CORP.) 17 September 2019 (2019-09-17) description, paragraphs 40-180, and figures 1-12 | | 1-13 |
| A | CN 111245220 A (SHANGHAI CHINT POWER SYSTEMS CO., LTD.) 05 June 2020 (2020-06-05) entire document | | 1-13 |
| A | JP 2017051001 A (OMRON TATEISI ELECTRONICS CO.) 09 March 2017 (2017-03-09) entire document | | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 June 2023** | **20 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091135**

| Patent document cited in search report | | | Publication date (day/month/year) | Patent family member(s) | | | Publication date (day/month/year) |
|---|---|---|---|---|---|---|---|
| CN | 115514220 | A | 23 December 2022 | None | | | |
| CN | 110249518 | A | 17 September 2019 | US | 2020099300 | A1 | 26 March 2020 |
| | | | | US | 10756629 | B2 | 25 August 2020 |
| | | | | WO | 2018146902 | A1 | 16 August 2018 |
| | | | | DE | 112017007042 | T5 | 24 October 2019 |
| | | | | JP | 6453526 | B1 | 16 January 2019 |
| | | | | JPWO | 2018146902 | A1 | 11 April 2019 |
| | | | | CN | 110249518 | B | 27 April 2021 |
| CN | 111245220 | A | 05 June 2020 | CN | 211656005 | U | 09 October 2020 |
| JP | 2017051001 | A | 09 March 2017 | JP | 6507948 | B2 | 08 May 2019 |
| | | | | WO | 2017038117 | A1 | 09 March 2017 |
| | | | | US | 2018175743 | A1 | 21 June 2018 |
| | | | | US | 10193470 | B2 | 29 January 2019 |

Form PCT/ISA/210 (patent family annex) (July 2022)

**REFERENCES CITED IN THE DESCRIPTION**

**Patent documents cited in the description**

- CN 202211242950